(19) Europäisches Patentamt
European Patent Office
Office européen des brevets

(11) **EP 1 948 571 B1**

(12) **EUROPEAN PATENT SPECIFICATION**

(45) Date of publication and mention
of the grant of the patent:
**20.01.2010 Bulletin 2010/03**

(51) Int Cl.:
***C03C 17/28*** (2006.01)

(21) Application number: **06808387.2**

(86) International application number:
**PCT/GB2006/004089**

(22) Date of filing: **02.11.2006**

(87) International publication number:
**WO 2007/052028 (10.05.2007 Gazette 2007/19)**

(54) **SURFACE TREATMENT OF GLASS SHEETS PRIOR TO STORAGE**

OBERFLÄCHENBEHANDLUNG VON GLASPLATTEN VOR DER LAGERUNG

TRAITEMENT DE SURFACE DE PLAQUES DE VERRE AVANT LE STOCKAGE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **05.11.2005 GB 0522640**

(43) Date of publication of application:
**30.07.2008 Bulletin 2008/31**

(73) Proprietor: **Pilkington Group Limited
St. Helens
Merseyside WA10 3TT (GB)**

(72) Inventor: **Holmes, Paul, Arthur
Northwich
Cheshire
CW8 3QY, GB (GB)**

(74) Representative: **Towlson, Samantha Jayne et al
Pilkington plc
Group IP Department
Pilkington Europ. Technical Centre
Hall Lane, Lathom
GB-Ormskirk, Lancashire L40 5UF (GB)**

(56) References cited:
**GB-A- 1 413 031     US-A- 5 641 576
US-A- 6 139 970     US-A1- 2005 011 779**

• **DATABASE WPI Week 200167 Derwent
Publications Ltd., London, GB; AN 2001-592552
XP002421315 -& JP 2001 172054 A (NIPPON
ELECTRIC GLASS CO) 26 June 2001 (2001-06-26)**

## Description

The present invention relates to the storage of glass, and in particular, to the protection of the surface of glass sheets during storage and transportation.

Sheets of glass are vulnerable to staining due to corrosion of the glass surface during storage, and also to damage caused by transit rub (where two sheets of glass rub together and/or where glass fragments from the cutting process rub the surface of the glass) during transportation. Both staining and transit rub result in the glass having a poor surface quality, which then creates problems in subsequent uses, for example, coating, printing, silvering, laminating, etc.. The damage to the surface of the glass is often also visible to the eye. Known solutions to both staining and transit rub involve using an interleavant between adjacent sheets of glass. The interleavant prevents adjacent sheets of glass from being in contact, reducing or eliminating transit rub. Typical interleavants include paper, PMMA (polymethyl methacrylate) beads and coconut husk flour.

Storing glass in humid conditions causes water to adsorb onto the surface of the glass. Staining of the glass occurs when water on the surface of the glass sheet reacts with the silicate network of the glass. Water diffuses into the glass and exchanges for alkali glass components, which are then leached to the surface of the glass. The leached alkali glass components, particularly sodium and potassium, dissolve in the surface water to form an alkaline solution, which can attack and dissolve the silicate matrix of the glass itself, creating a series of etch pits on the surface of the glass. Other glass components, such as calcium and magnesium, can then react with the silicate species dissolved by the alkali attack to form insoluble salts, causing a precipitate to be deposited on the surface of the glass. The main approach to reduce staining of the glass surface is to use a chemical stain inhibitor, which reacts on the surface, of the glass to neutralise the leached alkali. Other approaches, such as the use of film coatings on the surface of the glass may also be used. Chemical stain inhibitors are typically used in conjunction with interleavants, for example, coconut husk flour and PMMA beads, in order to prevent transit rub. Interleavants, such as paper, may also reduce the amount of staining present on the surface of the glass by absorbing some of the water present on the surface of the glass. As the amount of surface water is reduced, the amount of alkali leached and consequential surface damage to the glass are reduced.

GB 1,477,204 discloses the use of a weakly acidic material as a stain inhibitor. A porous support material, such as coconut shell flour or hardwood flour is used to support a weak acid, such as maleic or adipic acid. The porous support material is then mixed with particles of a chemically inert plastics material, such as a thermoplastic homopolymer or copolymer, to form an interleavant. The interleavant is then applied to the glass as a powder.

GB 1,413,031 also discloses the use of weak acids as stain inhibitors, for example, adipic acid, citric acid, maleic acid and malic acid, suspended in a solvent and sprayed onto the surface of the glass to be stored. US 3,723,312 discloses the use of salicyclic acid, or a mixture of dedusted agglomerated salicyclic acid and an inert separator material, Such as polystyrene beads, as a stain inhibitor.

US 2005/0011779 A1 discloses the use of watery mixtures of adipic and malic, adipic and citric or citric and malic acids as stain inhibitors for glass storage in conjunction with a separating powder as an interleavant. Groups of glass sheets are then hermetically sealed to prevent further water ingress during storage.

All of the above examples are concerned with the direct application of acids to the surface of the glass. However, the application of acids directly to the surface of the glass can actually cause the alkali leaching that produces staining of the glass to become worse.

Under acidic conditions, for example when adipic acid is used, onium ions ($H_3O^+$ from the dissolution of the acid in the water present on the surface of the glass) diffuse into the glass and exchange for the alkali metal (sodium) present in the glass. This reaction releases sodium ions from the glass structure that then diffuse to the surface, and react with the acid stain inhibitor. As in the glass corrosion mechanism mentioned above, the alkaline solution of the sodium ions eventually neutralises all of the acid stain inhibitor and the pH on the surface of the glass then increases to initiate alkaline attack on the silicate network of the glass.

In the absence of the acid stain inhibitor, the diffusion of sodium ions to the surface of the glass would have occurred at a rate determined by the diffusion of any water present on the surface of the glass. This is because electrical neutrality must be preserved at the glass surface. Thus, any sodium ions diffusing to the surface must carry a counter-anion with them. In the absence of water, the only counter-anion available in the silicate network is the oxygen dianion, $O^{2-}$, and this is immobile at temperatures below about 600°C. In the presence of acid stain inhibitors, however, the release of sodium from the network structure is simply an exchange of sodium ions for onium ions with no net change in charge and the counter-ion for the sodium and onium ions is the highly mobile hydroxyl anion, $OH^-$. The direct application of an acid to the surface of the glass results in the mechanisms for sodium ion diffusion in the presence of surface water being catalysed, resulting in an alkaline attack on the silicate network of the glass. The direct application of an acid to the surface of the glass is therefore undesirable.

There is therefore a need for a stain inhibitor, which reduces the staining on the surface of the glass, and which does not act to promote leaching of the alkali content that leads to the dissolution of the silicate network of the glass.

US 5,641,576 discloses the use of buffered organic acids as stain inhibitors to prevent the corrosive effect of the very low pH of an acidic solution.

The present invention aims to address the above problems by providing a stain inhibitor, which acts to neutralise the alkali leached to the surface of a sheet of glass in the presence of water, comprising a compound, wherein the compound is an ester that hydrolyses in water in a base-catalysed hydrolysis reaction to produce an acid, and the acid acts to neutralise the alkali leached to the surface of the glass.

The advantage of using a compound that reacts with the water present on the surface of the glass to form an acid, rather than directly applying an acid to the surface of the glass, to neutralise the leached alkali is that the leaching of the alkali that results in dissolution of the silica network of the glass is not catalysed. This results in the reduction of haze and improvement in the surface quality of the glass.

The compound may be soluble in water, or may be dispersed in water using a surfactant.

The compound may comprise one of epsilon caprolactone, polycaprolactone triol, diacetin, triacetin, diethyl malate, dihydroacetic acid, diethyl tartrate, triethyl citrate, diethylene glycol diacetate or Borester 240.

A solution comprising the compound and a solvent may be applied to the surface of the glass. In particular, the solution may be sprayed onto the surface of the glass. The solution may further comprise an alkali to neutralise any acid formed from the compound in storage. The alkali may be caustic soda. The solvent may be one of isopropanol, acetone and DI water. The solution may also comprise a surfactant.

The solution may be used in conjunction with an interleavant. The interleavant may be one of PMMA beads, UHMWPE beads, coconut husk flour, hard wood flour or paper.

Preferably, the compound has a pH between 6 and 9.4 when dissolved in DI water. More preferably, the compound has a pH between 7 and 9 when dissolved in DI water.

The invention further provides the use of an ester that hydrolyses in water in a base-catalysed reaction to form an acid, to neutralised alkali leached to the surface of a sheet of glass in the presence of water.

The invention yet further provides a method of reducing the haze of the surface of a sheet of glass in storage, comprising applying a stain inhibitor to the surface of the glass, the stain inhibitor comprising an ester that hydrolyses in water to produce an acid in a base-catalysed hydrolysis reaction to neutralise alkali leached to the surface of the sheet of glass in the presence of water. Glass treated with the stain inhibitor is also provided, as is the use of an ester that hydrolyses in water in a base-catalysed reaction as a stain inhibitor to prevent the corrosion of glass in storage.

The invention will now be described by way of example only, and with reference to the accompanying drawings in which:

Figure 1 is a graph illustrating the pH behaviour of known stain inhibitors;
Figure 2 is a graph showing the buffering behaviour of epsilon caprolactone;
Figure 3 is a graph showing the haze of samples treated with a stain inhibitor of the present invention and weathered under accelerated conditions of 60°C and 80% relative humidity for 50 days in total;
Figure 4 is a schematic cross-section showing the multilayer coating stack used in resistance measurements;
Figure 5 is a graph showing the sheet resistance of samples treated with a stain inhibitor of the present invention and weathered under accelerated conditions of 60°C and 80% relative humidity for 50 days in total; and
Figure 6 is a graph showing the percentage light transmission of samples treated with a stain inhibitor of the present invention and weathered under accelerated conditions of 60°C and 80% relative humidity for 50 days in total.

The corrosion of silicate glass occurs when water from an adsorbed surface film diffuses into the silica network of the glass, and establishes an equilibrium:

$$\equiv Si - O - Si \equiv + H_2O \leftrightharpoons 2 \equiv Si - OH$$

The reaction is catalysed by the hydroxyl anion, and so is strongly pH dependent:

$$\equiv Si - O - Si \equiv + OH^{\cdot} \leftrightharpoons \equiv Si - OH + \equiv Si - O^{\cdot}$$

$$\equiv Si - O^{\cdot} + H_2O \leftrightharpoons 2 \equiv Si - OH + OH^{\cdot}$$

Thus, the silicate network is stable under acid conditions, but is attacked rapidly at pH>9. However, under acid conditions, the oxonium ion, $H_3O^+$ exchanges rapidly with the alkali in the glass:

$$\equiv Si - ONa + H_3O^+ \rightleftharpoons \equiv Si - OH + Na^+ + H_2O$$

If the released alkali is not washed away, it will increase the pH of the water in contact with the glass surface, and as discussed above, if the pH exceeds 9, dissolution of the silicate network will commence. In addition, $CO_2$ dissolves in the adsorbed water film, creating carbonic acid, which also diffuses into the surface of the glass. At the same time as Na diffuses to the surface of the glass, the protons in the water are also exchanged for other elements, such as K, Ca, Mg. Ca and Mg precipitate at the surface of the glass when they react with dissolved carbonate and silicate anions to form insoluble salts (carbonates and silicates). Such insoluble salts are then re-deposited on the glass surface. The combination of precipitated salts and etched regions (from the dissolution of the silicate network) causes an increase in haze (decrease in direct light transmission of the glass). In addition, when alkali is leached to the surface of the glass, a region of the glass just below the surface becomes depleted of sodium. This can by verified by use of XPS (X-ray photon spectroscopy).

The corrosion process therefore starts with the diffusion of water and onium ions into the glass, resulting in leaching first of the alkali metals and then the alkaline earth metals. If the pH increases sufficiently, the actual silicate network will break down.

As discussed above, the use of adipic acid catalyses the first stage of the corrosion mechanism by increasing the onium ion concentration. The pKa value for the first ionisation of adipic acid is 4.4, and a 1% solution of adipic acid in water has a pH of 2.8, giving an increased concentration of onium ions compared with a glass surface where there is no acid present. This also explains why use of a weaker acid, such as boric acid, results in a more effective stain inhibitor.

However, even the use of a weaker acid, such as boric acid, also creates problems. Although the pKa value is higher (9.47), giving a pH of 5.0 and therefore the concentration of onium ions for a solution of boric acid in water is $\approx$ 150 times less than for a solution of adipic acid in water, the boric acid is rapidly neutralised by the leached sodium hydroxide. This increases the pH of the water on the surface of the glass to approximately >9, thereby triggering the dissolution of the silicate network in the glass. Therefore, although boric acid does not catalyse the leaching of sodium to the glass surface as much as adipic acid, the pH of the boric acid that is partially neutralised by leached alkali will approach the pKa of 9.47 and this is high enough to initiate alkaline attack of the silicate network, with the result that the glass will begin to corrode.

On this basis, an ideal stain inhibitor should have an initial pH of 5 to 8, a pKa of 6 to 8.5 and will neutralise a large amount of caustic soda. In addition, the stain inhibitor should be non-toxic, water soluble and non-volatile.

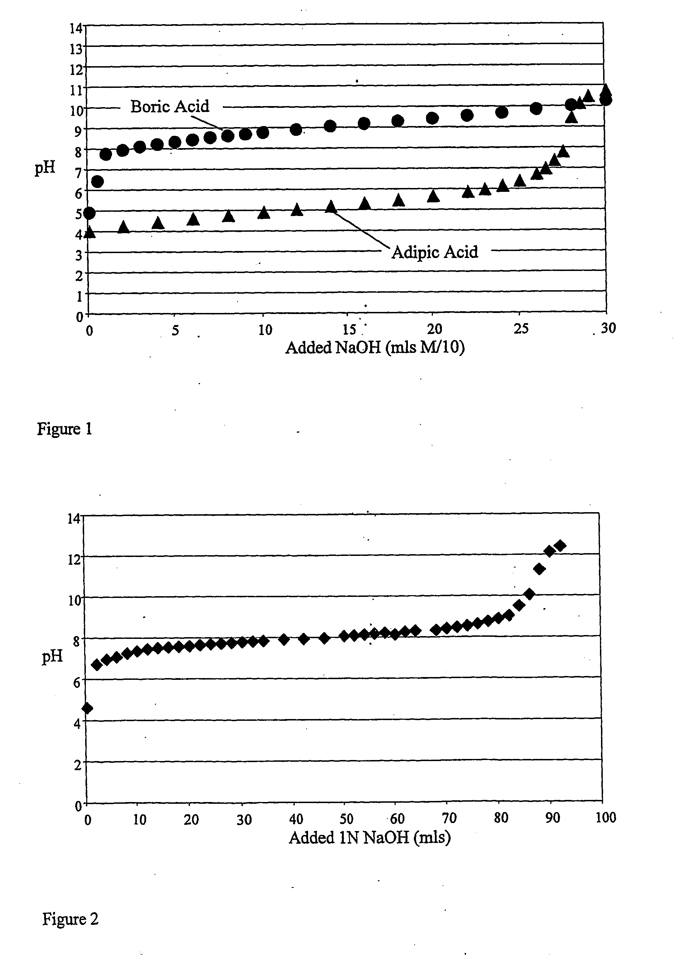

Figure 1 illustrates how the pH behaviour of a stain inhibitor can affect the neutralisation process. Figure 1 is a graph showing the change in pH of solutions of various stain inhibitors (0.2g of stain inhibitor in 200ml water) against millilitres of added 0.1M sodium hydroxide. A stain inhibitor that rapidly increases in pH with addition of alkali leaves the silica matrix of the glass open to increased alkaline attack, such as with, boric acid. A stain inhibitor that remains acidic during addition of alkali will accelerate the sodium exchange in the depletion region just below the surface of the glass, for example, adipic acid.

Based on the above theories and experimental results, it is possible to list criteria that a compound should ideally satisfy, in order to be stain inhibitor:

1   The compound must act to neutralise the leached alkali to prevent the pH of the adsorbed surface water layer exceeding $\approx$9.4. The silicate matrix is attacked at pH > 9.4, forming silicic acid which then reacts with calcium and magnesium to form insoluble salts (silicates).

2   The compound should not encourage the exchange of $\equiv$Si-ONa groups in the silicate network for $\equiv$Si-OH, which releases $Na^+$ that can then migrate to the surface of the glass. The pH of the compound when dissolved in DI water should preferably be greater than 6 but below 9.4, more preferably between 7 and 9.

3   The compound should be soluble in water or emulsify with water in order to react with the leached alkali.

4   The compound should not form insoluble salts with cation modifiers, particularly calcium and magnesium.

5   The compound should inhibit the formation of insoluble calcium carbonate on the surface of the glass by reaction with $CO_2$. The acid produced by hydrolysis should therefore be stronger than carbonic acid.

6   The compound should be molecularly dispersed on the surface of the glass with no concentration gradients to avoid formation of corrosion patterns.

7   The compound should not chelate with silica such that the silica in the glass will dissolve at lower pH.

8   The compound must be relatively non-volatile so that it remains on the glass surface and does not evaporate during storage of the glass, and non-toxic.

9   The hydrolysis of the compound should be base catalysed.

The approach taken based on this analysis in the present invention is to consider chemical compounds that are initially pH neutral, yet will act to buffer any alkali leached from the glass. Such chemical compounds hydrolyse slowly in neutral water but rapidly at high pH by base catalysis to produce acids that can then neutralise the leached alkali. As the compound is initially pH neutral, the concentration of onium ions is low, so the diffusion of sodium and resultant silicate network dissolution is not catalysed by the presence of the compound. At higher pH, acid is produced rapidly by base catalysis, neutralising the leached alkali before the silicate network dissolves, and effectively buffering the alkali produced. Suitable compounds include anhydrides, imides, amides, esters, cyclic esters (lactones) and cyclic amides (lactams).

One particularly suitable class of chemical compounds is esters, for example, caprolactone. Esters hydrolyse to produce an acid and an alcohol, the hydrolysis rate being pH dependent. If an ester hydrolyses very slowly in pure water, it will not cause a sudden decrease in pH when placed on a glass surface, but if pH increases due to leached alkali, the hydrolysis rate will increase producing acid more quickly to counter the pH increase. The hydrolysis of the ester should be base catalysed, such that the rate of hydrolysis increases as the pH increases, to achieve maximum resistance to glass corrosion.

Figure 2 illustrates the buffering effect of the ester epsilon caprolactone. 10g of epsilon caprolactone was diluted in 200ml of DI water, with 2ml aliquots of 1N sodium hydroxide added, and the pH measured after 20 minutes. The increase in pH with addition of sodium hydroxide is gradual, with a pH of approximately 9 reached after the addition of 80ml of 1N sodium hydroxide. The rate of hydrolysis is proportional to the concentration of the ester multiplied by the concentration of OH ions. The rate of hydrolysis therefore increases at higher pH, producing more acid, which in turn leads to the gradual change pH observed in Figure 2. As an illustration of how effective epsilon caprolactone is at buffering the surface of the glass, the addition of 1ml of 1N sodium hydroxide to DI (de-ionised) water causes an immediate increase in pH from 6.9 to 11.4.

In order to determine the effectiveness of esters as stain inhibitors, a series of trials were carried out, using the esters listed in Table 1 below:

Table 1: Esters used in trials

| Number | Ester |
| --- | --- |
| Reference | LBK Paper |
| 1 | Epsilon Caprolactone |
| 2 | Polycaprolactone Triol |
| 3 | Diacetin (Glycerol Diacetate) |
| 4 | Triacetin (Glycerol Triacetate) |
| 5 | Diethyl Malate |
| 6 | Dihydroacetic Acid |
| 7 | Diethyl Tartrate |
| 8 | Triethyl Citrate |
| 9 | Diethylene Glycol Diacetate |
| 10 | Borester 240 (cyclic triester of boric acid with diethylene glycol monomethyl ether) |

The caprolactone monomer is a cyclic monomer and a mobile liquid at room temperature, and is designated epsilon caprolactone or delta caprolactone, depending on the chemical structure. Only epsilon caprolactone was used in the ester trials.

Table 2 below lists the experimental conditions used in the ester trials, including the solvent used to dissolve the ester in before spraying onto the surface of the glass, the amount of ester dissolved in terms of grams of inhibitor applied per $m^2$ of glass, whether the solution was pre-neutralised, and the type of interleavant used.

Table 2: Experimental conditions for ester trials.

| Stain Inhibitor | Quantity Applied (g/$m^2$ glass) | Solvent | Pre-Neutralisation | Interleavant |
| --- | --- | --- | --- | --- |
| Epsilon Caprolactone | 2 | Iso-propyl alcohol | No | PMMA |

(continued)

| Stain Inhibitor | Quantity Applied (g/m$^2$ glass) | Solvent | Pre-Neutralisation | Interleavant |
|---|---|---|---|---|
| Polycaprolactone Triol | 2 | Iso-propyl alcohol | No | MMA |
| Diacetin | 0.9 | Iso-propyl alcohol | No | PMMA |
| Triacetin | 1.5 | Iso-propyl alcohol | No | PMMA |
| Diethyl Malate | 1 | Iso-propyl alcohol | Yes | PMMA |
| Dihydroacetic Acid | 1.7 | Acetone | No | PMMA |
| Diethyl Tartrate | 1 | Iso-propyl alcohol | Yes | PMMA |
| Triethyl Citrate | 0.9 | Iso-propyl alcohol | Yes | UHMWPE |
| Diethylene Glycol Diacetate | 2 | Iso-propyl alcohol | Yes | UHWMPE |
| Borester 240 | 2 | Iso-propyl alcohol | No | UHMWPE |

Any free acid in the ester, produced by hydrolysis during storage, was first neutralized by adding a small amount of dilute sodium hydroxide until the pH was >= 6. The hydrolysis of all of the esters listed in Table 1 is base catalysed.

Samples were prepared from 4mm thick float glass, cut into 30cm by 30cm plates, and washed using a flatbed washer with hot, de-ionised water (at 60°C), but with no detergent, to remove any glass fragments present on the glass surface from the cutting process. Once washed, the plates of glass were dried using an airknife to avoid drying marks on the surface of the glass. The stain inhibitor was then applied by spraying in the form of a solution in Iso-propyl alcohol or acetone, as shown in Table 2 above. The solvent evaporated leaving the ester stain inhibitor on the glass and either PMMA (poly(methyl methacrylate)) or UHMWPE (ultra high molecular weight polyethylene) interleavant beads were applied at 100mg/m$^2$. Each stain inhibitor was tested with an interleavant to mimic real life situations where the interleavant is necessary to reduce transit rub and to separate the plates of glass.

The individual plates of glass were then stacked in groups of 7, comprising 5 test plates and 2 cover plates, placed on a mini-stillage (i.e. stacked almost vertically on an L-shaped holder) and put into a humidity cabinet for accelerated ageing. The accelerated aging cycle chosen was 40°C/80% relative humidity for 10 days and then 60°C/80% humidity for 40 days. The weathering of the glass is affected by changes in temperature and humidity. For example, weathering for 30 days at 60°C may result in glass having similar corrosion to that weathered for 6 to 20 years at 20°C, depending on the precise activation energy for sodium diffusion. A two-stage test is used to balance light weathering under slightly accelerated conditions, for example 3 - 6 months at 20°C, and the minimum amount of weathering measurable using haze detection.

Once ageing was complete, the mini-stillage was removed from the humidity cabinet and each glass plate washed individually to remove the stain inhibitor and the interleavant, and inspected visually for any sign of staining. The haze of each plate was then measured using a BYK-Gardner Haze-gard Plus machine, in accordance with ASTM D 1003.

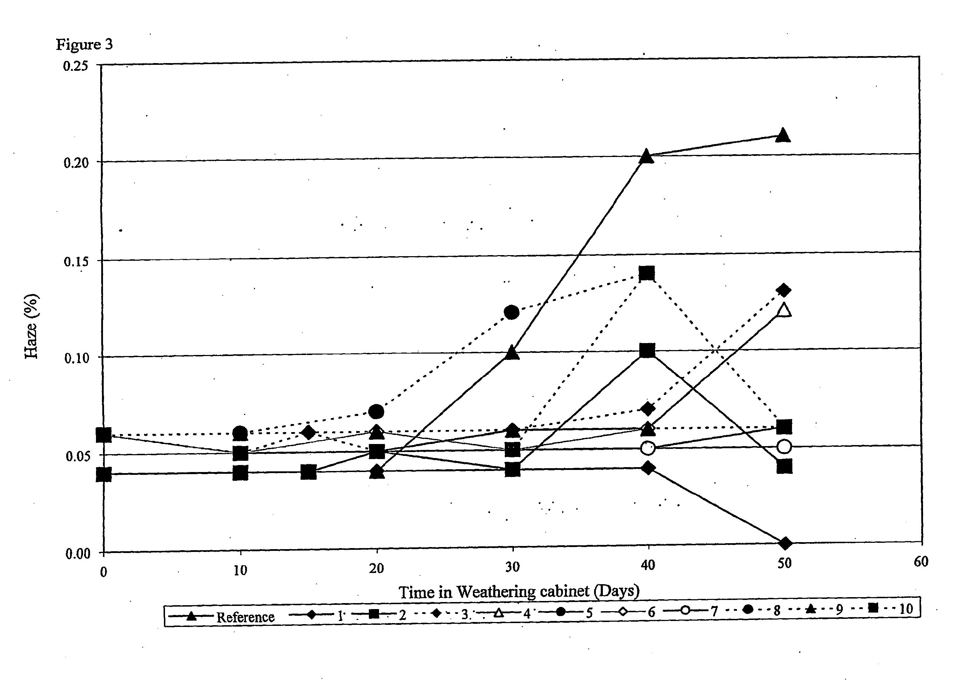

Figure 3 is a graph showing the haze of the samples discussed above weathered at 40°C/80% relative humidity for 10 days and then at 60°C/80% humidity for 40 days. Glass stored with a conventional interleavant, LBK paper, was also weathered and tested for comparison. Samples were removed from the cabinet at 10, 20, 30, 40 and 50 days, and examined.

In general, the performance of all the esters was good, as each gave less haze than the LBK paper reference. Of the esters, epsilon caprolactone gave the best performance, showing zero % haze after 50 days in the weathering cabinet. Diethyl malate, dehydroacectic acid, diethyl tartrate, diethylene glycol diacetate and polycaprolatone triol also gave good results, with a haze of 0.06% or less after 50 days. Borester 240 and triethyl citrate gave mixed results, with diacetin and triacetin showing a slight increase in haze after 40 days. As a comparison, LBK paper gave a steady increase in haze over the measurement period, with samples showing 0.21% haze after 50 days in the weathering cabinet.

Other suitable esters include delta caprolactone, glycerol acetate, sucrose acetate (in particular, sucrose tetraacetate and sucrose octaacetate), glucose acetate, diethyl (bis hydroxymethyl) malonate, diethyl (ethoxymethylene) malonate and poly(vinyl pyrrolidone-co-vinyl acetate). In addition to water soluble, non-toxic, non-volatile compounds, esters that are not soluble in water, for example, whiskey lactone and decanolactone, can be mixed with a surfactant, for example, benzalkonium chloride (available under the trade name Quadrilan BC), before application to the surface of the glass. It may also be necessary to dissolve the ester in acetone, rather than Iso-propyl alcohol. For example, although glycerol diacetate and poly(vinyl pyrrolidone-co-vinyl acetate) may be dissolved in Iso-propyl alcohol, sucrose octaacetate needs to be dissolved in acetone with the addition of 1% benxalkonium chloride surfactant, based on the weight of the sucrose octaacetate used, to be applied to the surface of the glass. The hydrolysis of such esters needs to be base catalysed to be suitable as stain inhibitors. However, during storage, some esters may react with water in the atmosphere, and hydrolyse to produce a small amount of acid. For example, caprolactone may produce a small amount of hydroxypentanoic acid during storage. When a solution of caprolactone and a solvent, such as Iso-propyl alcohol is formed to be applied to the surface of the glass, an alkali may be added to neutralise any acid produced during the storage of the ester. Caustic soda is a suitable alkali for this purpose.

Although the measurement of the haze of the glass gives a good indication of the ability of the ester to act as a stain inhibitor, haze is generally perceived subjectively by the human eye. Results from techniques such as AFM (Atomic force microscopy) are time consuming to obtain, and inconsistent. The early stages of glass corrosion are typified by extremely small etch pits and precipitated deposits, each of the order of tens of nanometres in size. As the major issue with haze is the detrimental effect that the haze has on coatings deposited on stored glass, a more objective test is to coat the stored glass, after weathering, once such pits and deposits have appeared on the surface of the glass, and to examine the quality of the coating.

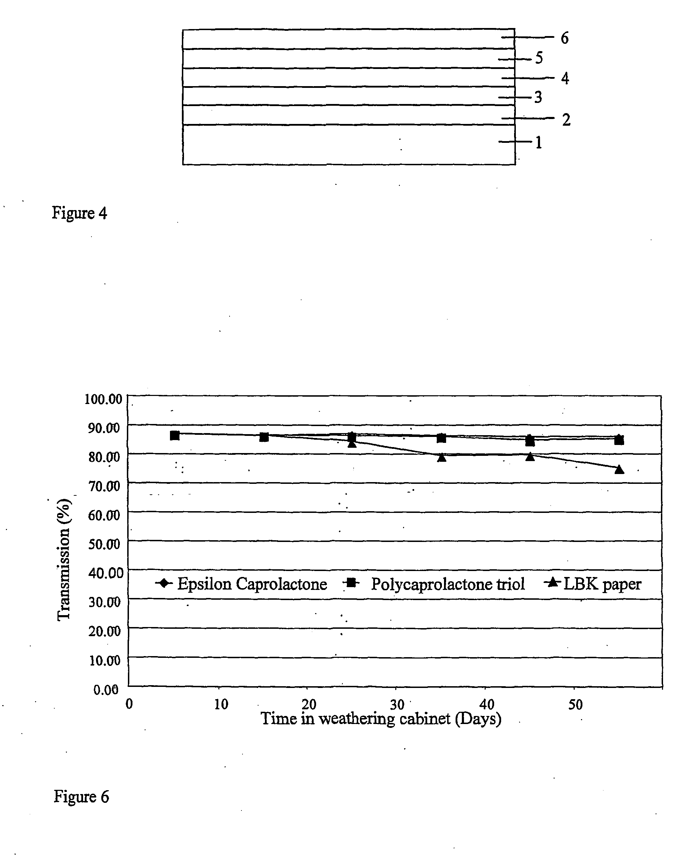

Samples were coated with a multilayer stack as shown in Figure 4. A weathered glass sample 1 is initially coated with a titania ($TiO_2$) layer 2. The titania layer is conformal, and so will preserve any surface roughness including etch pits on the weathered glass 1. A zinc oxide (ZnO) layer is then deposited onto the titania layer 2. The zinc oxide layer 3 has a crystalline structure, with the direction of crystal growth being perpendicular to the surface of the titania layer 2, with the [002] crystallographic plane parallel to the surface. A conductive silver (Ag) layer 4 is deposited onto the zinc oxide layer 3. The direction of the crystal growth of the zinc oxide layer 3 will affect the thickness of the conductive silver layer 4, which grows with a preferred [111] crystallographic plane parallel to the surface. The zinc oxide layer 3 therefore amplifies the surface topology of the weathered glass surface. Areas of etch pits and precipitates, which increase the roughness of the glass surface, cause the crystallites of the zinc oxide layer 3 and silver layer 4 to become disordered, causing an increase in the sheet resistance of the sample. Hence, the measurement of the resistivity of the coating on the surface of the glass gives an indication of how badly the glass has been stained. A further zinc alumina oxide layer 5 and a zinc tin oxide ($ZnSnO_x$) layer 6 are then deposited on top of the conductive silver layer 4. The sheet resistance of the coated samples was measured using a Nagy SRM-12 sheet resistivity meter.

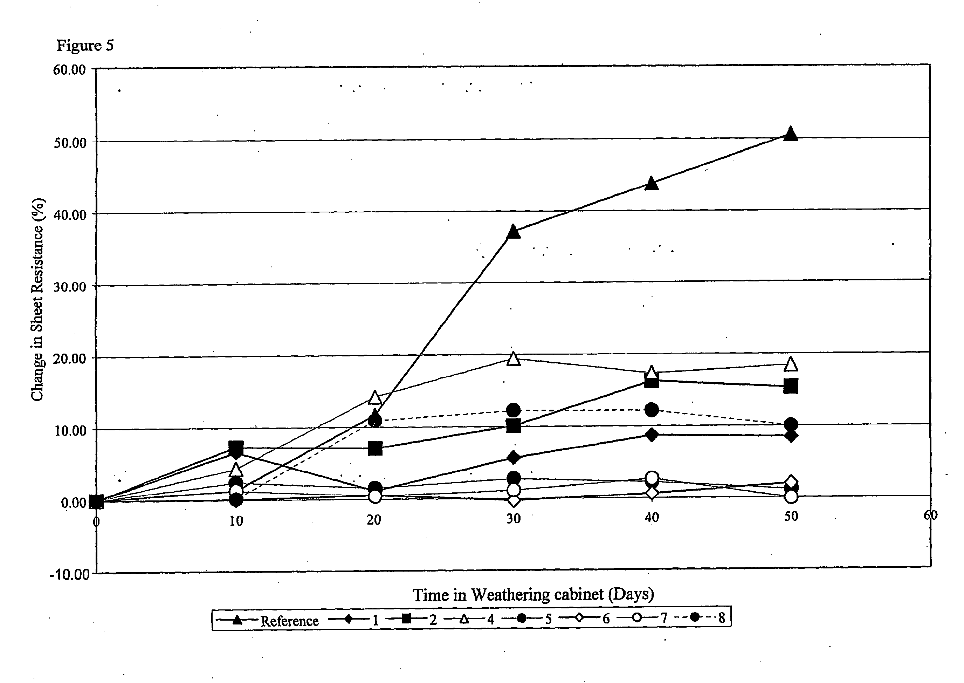

Figure 5 is a graph showing the average sheet resistance of the glass samples treated with esters 1, 2, 4, 5, 6, 7 and 8 in Table 1 above, and weathered for 40°C/80% relative humidity for 10 days and then at 60°C/80% humidity for 40 days. Samples were again weathered stacked with LBK paper for comparison. The samples were then coated with the multilayer coating stack, and the sheet resistance of a series of nine samples weathered for 0, 10, 20, 30, 40 and 50 days respectively, for each stain inhibitor, was measured. These measurements were then used to calculate an average sheet resistance for samples treated with each stain inhibitor.

As can be seen from Figure 5, samples treated with each of the esters showed a lower change in sheet resistance than the LBK paper reference. In all cases, the change in sheet resistance was less than 20%, compared with over 50% for LBK paper. Of the esters, dehydroacetic acid, diethyl malate, and diethyl tartrate showed the lowest percentage change in sheet resistance. The sheet resistance results are consistent with the haze measurements shown in Figure 3, confirming that epsilon caprolactone and diethyl tartrate gave the best stain inhibitor performance of those esters tested.

Light transmission was measured for epsilon caprolactone, polycaprolactone and LBK paper using a Perkin Elmer Lambda 900 spectrophotometer. Nine samples were measured and an average light transmission obtained, as shown in Figure 6. Figure 6 illustrates that the amount of light transmitted through the glass decreases with increased weathering. This is particularly noticeable for the samples weathered with LBK paper only. For samples treated with epsilon caprolactone or polycaprolactone triol, even after leathering, the light transmission is above 80%.

From these results it is clear that esters, such as epsilon caprolactone, give better protection to glass when used in conjunction with a standard interleavant from weathering than a traditional interleavant. Unlike other acid-based stain inhibitors, the esters tested do not appear to accelerate the corrosion of glass, but neutralise any alkali leached from the glass in the presence of water with the minimum of damage to the glass surface:

## Claims

1. A stain inhibitor, which acts to neutralise the alkali leached to the surface of a sheet of glass in the presence of water, comprising a compound, wherein the compound is an ester that hydrolyses in water in a base-catalysed hydrolysis reaction to produce an acid, and the acid acts to neutralise the alkali leached to the surface of the glass.

2. The stain inhibitor of claim 1, wherein the compound is soluble in water.

3. The stain inhibitor of claim 1, wherein the compound is dispersed in water using a surfactant.

4. The stain inhibitor of claim 1, 2 or 3, wherein the compound comprises one of epsilon caprolactone, polycaprolactone triol, diacetin, triacetin, diethyl malate, dihydroacetic acid, diethyl tartrate, triethyl citrate, diethylene glycol diacetate or Borester 240.

5. The stain inhibitor of any preceding claim, wherein a solution comprising the compound and a solvent is applied to the surface of the glass.

6. The stain inhibitor of claim 5, wherein the solution is sprayed onto the surface of the glass.

7. The stain inhibitor of claim 5 or 6, wherein the solution further comprises an alkali to neutralise any acid formed from the compound in storage.

8. The stain inhibitor of claim 7, wherein the alkali is caustic soda.

9. The stain inhibitor of any of claims 5 to 8, wherein the solvent is one of isopropanol, acetone and DI water.

10. The stain inhibitor of any of claims 5 to 9, wherein the solution also comprises a surfactant.

11. The stain inhibitor of any preceding claim, wherein the compound has a pH between 6 and 9.4 when dissolved in DI water.

12. The stain inhibitor of any preceding claim wherein the compound has a pH between 7 and 9 when dissolved in DI water.

13. A method of reducing the haze of the surface of a sheet of glass in storage, comprising applying a stain inhibitor to the surface of the glass, the stain inhibitor comprising an ester that hydrolyses in water to produce an acid in a base-catalysed hydrolysis reaction to neutralise alkali leached to the surface of the sheet of glass in the presence of water.

14. Glass treated with the stain inhibitor of any of claims 1 to 12.

15. Use of an ester that hydrolyses in water in a base-catalysed reaction as a stain inhibitor to prevent the corrosion of glass in storage.

**Patentansprüche**

1. Fleckenbildungs-Inhibitor, der so wirkt, dass er das aus der Oberfläche einer Glasscheibe in Gegenwart von Wasser herausgelöste Alkali neutralisiert, und eine Verbindung umfasst, wobei die Verbindung ein Ester ist, der in Wasser in einer basenkatalysierten Hydrolysereaktion unter Bildung einer Säure hydrolysiert, und die Säure so wirkt, dass sie das aus der Oberfläche des Glases herausgelöste Alkali neutralisiert.

2. Fleckenbildungs-Inhibitor nach Anspruch 1, bei dem die Verbindung in Wasser löslich ist.

3. Fleckenbildungs-Inhibitor nach Anspruch 1, bei dem die Verbindung unter Verwendung eines Tensids in Wasser dispergiert ist.

4. Fleckenbildungs-Inhibitor nach Anspruch 1, 2 oder 3, bei dem die Verbindung eine der folgenden Verbindungen ist: ε-Caprolacton, Polycaprolactontriol, Diacetin, Triacetin, Diethylmalat, Dihydroxyessigsäure, Diethyltartrat, Triethylcitrat, Diethylenglycoldiacetat oder Borester 240.

5. Fleckenbildungs-Inhibitor nach einem der vorhergehenden Ansprüche, wobei eine Lösung, welche die Verbindung und ein Lösungsmittel enthält, auf die Oberfläche des Glases aufgebracht wird.

6. Fleckenbildungs-Inhibitor nach Anspruch 5, wobei die Lösung auf die Oberfläche des Glases aufgesprüht wird.

7. Fleckenbildungs-Inhibitor nach Anspruch 5 oder 6, wobei die Lösung ferner ein Alkali enthält, um bei der Lagerung aus der Verbindung gebildete Säure zu neutralisieren.

**8.** Fleckenbildungs-Inhibitor nach Anspruch 7, wobei das Alkali Natriumhydroxid ist.

**9.** Fleckenbildungs-Inhibitor nach einem oder mehreren der Ansprüche 5 bis 8, wobei das Lösungsmittel Isopropanol, Aceton oder entionisiertes Wasser ist.

**10.** Fleckenbildungs-Inhibitor nach einem oder mehreren der Ansprüche 5 bis 9, wobei die Lösung ferner ein Tensid enthält.

**11.** Fleckenbildungs-Inhibitor nach einem der vorhergehenden Ansprüche, wobei die Verbindung nach Auflösen in entionisiertem Wasser einen pH-Wert im Bereich von 6 bis 9,4 ergibt.

**12.** Fleckenbildungs-Inhibitor nach einem der vorhergehenden Ansprüche, wobei die Verbindung nach Auflösen in entionisiertem Wasser einen pH-Wert im Bereich von 7 bis 9 ergibt.

**13.** Verfahren zur Verringerung der Trübung der Oberfläche einer Glasscheibe bei der Lagerung, welches das Aufbringen eines Fleckenbildungs-Inhibitors auf die Oberfläche des Glases umfasst, wobei der Fleckenbildungs-Inhibitor einen Ester umfasst, der in Wasser in einer basenkatalysierten Hydrolysereaktion unter Bildung einer Säure hydrolysiert, die das aus der Oberfläche der Glasscheibe in Gegenwart von Wasser herausgelöste Alkali neutralisiert.

**14.** Glas, das mit dem Fleckenbildungs-Inhibitor nach einem oder mehreren der Ansprüche 1 bis 12 behandelt ist.

**15.** Verwendung eines Esters, der in Wasser in einer basenkatalysierten Reaktion hydrolysiert, als Fleckenbildungs-Inhibitor zur Verhinderung der Korrosion von Glas bei der Lagerung.

**Revendications**

**1.** Inhibiteur de ternissement, qui agit en neutralisant l'agent alcalin lessivé à la surface d'une feuille de verre en présence d'eau, comprenant un composé, dans lequel le composé est un ester qui s'hydrolyse dans l'eau dans une réaction d'hydrolyse catalysée par une base pour produire un acide, et l'acide agit en neutralisant l'agent alcalin lessivé à la surface du verre.

**2.** Inhibiteur de ternissement suivant la revendication 1, dans lequel le composé est soluble dans l'eau.

**3.** Inhibiteur de ternissement suivant la revendication 1, dans lequel le composé est dispersé dans l'eau en utilisant un agent tensioactif.

**4.** Inhibiteur de ternissement suivant la revendication 1, 2 ou 3, dans lequel le composé comprend un des composés consistant en l'epsilon-caprolactone, le polycaprolactone-triol, la diacétine, la triacétine, le malate de diéthyle, l'acide dihydroacétique, le tartrate de diéthyle, le citrate de triéthyle, le diacétate de diéthylèneglycol et le Borester 240.

**5.** Inhibiteur de ternissement suivant l'une quelconque des revendications précédentes, dans lequel une solution comprenant le composé et un solvant est appliquée à la surface du verre.

**6.** Inhibiteur de ternissement suivant la revendication 5, dans lequel la solution est pulvérisée sur la surface du verre.

**7.** Inhibiteur de ternissement suivant la revendication 5 ou 6, la solution comprenant en outre un agent alcalin pour neutraliser tout acide formé à partir du composé lors du stockage.

**8.** Inhibiteur de ternissement suivant la revendication 7, dans lequel l'agent alcalin est la soude caustique.

**9.** Inhibiteur de ternissement suivant l'une quelconque des revendications 5 à 8, dans lequel le solvant est un des solvants consistant en l'isopropanol, l'acétone et l'eau désionisée (DI).

**10.** Inhibiteur de ternissement suivant l'une quelconque des revendications 5 à 9, la solution comprenant également un agent tensioactif.

**11.** Inhibiteur de ternissement suivant l'une quelconque des revendications précédentes, dans lequel le composé a un pH compris entre 6 et 9,4 lors de sa dissolution dans de l'eau DI.

12. Inhibiteur de ternissement suivant l'une quelconque des revendications précédentes, dans lequel le composé a un pH compris entre 7 et 9 lors de sa dissolution dans de l'eau DI.

13. Procédé pour réduire le voile de la surface d'une feuille de verre lors du stockage, comprenant l'application d'un inhibiteur de ternissement à la surface du verre, l'inhibiteur de ternissement comprenant un ester qui s'hydrolyse dans l'eau en produisant un acide dans une réaction d'hydrolyse catalysée par une base pour neutraliser l'agent alcalin lessivé à la surface de la feuille de verre en présence d'eau.

14. Verre traité avec l'inhibiteur de ternissement de l'une quelconque des revendications 1 à 12.

15. Utilisation d'un ester qui s'hybride dans l'eau dans une réaction catalysée par une base comme inhibiteur de ternissement pour empêcher la corrosion du verre lors du stockage.

Figure 1

Figure 2

Figure 3

Figure 5

EP 1 948 571 B1

Figure 4

Figure 6

## REFERENCES CITED IN THE DESCRIPTION

**Patent documents cited in the description**

- GB 1477204 A
- GB 1413031 A
- US 3723312 A
- US 20050011779 A1
- US 5641576 A